# EUROPEAN PATENT APPLICATION

(11) **EP 4 607 024 A1**
(43) Date of publication of application: **27.08.2025**
(21) Application number: 24159267.4
(22) Date of filing: 23.02.2024
(51) Int. Cl.: F03D 7/02

(54) **MONITORING ROTATIONAL SPEED OF A ROTOR OF A WIND TURBINE**

(71) Applicant: Siemens Gamesa Renewable Energy A/S, 7330 Brande (DK)
(72) Inventor: Frouzakis, Nikolaos, 2450 Copenhagen (DK)
(74) Representative: SGRE-Association

(57) **Abstract**

A method of operating a wind turbine (1) that comprises a wind turbine rotor (10) is provided. The wind turbine (1) comprises at least a first sensing device (12) configured to obtain a rotational speed of the wind turbine rotor (10) and a second sensing device (13) configured to obtain a rotational speed of the wind turbine rotor (10). The wind turbine (1) is operable in a first operating mode in which a rotational speed of the wind turbine rotor (10) is within a first speed range and is operable in a second operating mode in which the rotational speed of the wind turbine rotor (10) is within a second speed range. The second sensing device (13) has a noise level in the second speed range that is lower than a noise level of the first sensing device (12) in the second speed range. The wind turbine (1) is configured to operate a safety function that uses the rotational speed of the wind turbine rotor (10) as an input. The method comprises operating the wind turbine (1) in the first operating mode and providing a speed signal of the first sensing device (12) as an input to the safety function and operating the wind turbine (1) in the second operating mode and providing a speed signal of the second sensing device (13) as an input to the safety function.

## Description

### FIELD OF THE INVENTION

The present invention relates to a method of operating a wind turbine, wherein a rotational speed of a rotor of the wind turbine is monitored in different operating modes. It further relates to a respective control system and computer program.

### BACKGROUND

Wind turbines are exposed to different wind conditions. In order to prevent incidents due to conditions for which the components of the wind turbine are not designed, several safety mechanisms are installed on the wind turbine. One of these safety mechanisms is the monitoring of the rotor speed by means of sensors installed on the wind turbine to avoid an overspeed condition. If the rotation speed becomes too high, the rotor blades may be pitched out or the wind turbine may be shut down.

During installation and maintenance, the rotor of the wind turbine generally needs to be brought into predefined positions in order to allow, e.g., the mounting of a rotor blade or the like. During such operation, the rotor is rotated significantly slower than during normal rotation, generally significantly slower than 1 rpm. However, also in such situation, an overspeed condition may occur, which may result in damage to the equipment and a dangerous situation. Conventional protective functions of the wind turbine are generally not operable at such low speeds. They may in particular result in a repeated triggering of safety measures, such as disconnection of the wind turbine's electric power generation system. In extreme cases, this can lead to a complete shutdown of work on the wind turbine due to a false alarm.

The use of such conventional protective measures may therefore result in increased maintenance or construction time of the wind turbine and therefore increase costs. It is desirable to avoid these negative effects.

### SUMMARY

Accordingly, there is a need to mitigate at least some of the drawbacks mentioned above, in particular to provide effective safety measures for different operating conditions of the wind turbine and to avoid unnecessary shutdowns of the wind turbine.

This need is met by the features of the independent claims. The dependent claims describe embodiments of the invention.

According to an embodiment of the invention a method of operating a wind turbine that comprises a wind turbine rotor is provided. The wind turbine comprises at least a first sensing device configured to obtain a rotational speed of the wind turbine rotor and a second sensing device configured to obtain a rotational speed of the wind turbine rotor.

The wind turbine is operable in a first operating mode in which a rotational speed of the wind turbine rotor is within a first speed range and is operable in a second operating mode in which the rotational speed of the wind turbine rotor is within a second speed range. The second sensing device has a noise level in the second speed range that is lower than a noise level of the first sensing device in the second speed range. The wind turbine is configured to operate a safety function that uses the rotational speed of the wind turbine rotor as an input. The method comprises operating the wind turbine in the first operating mode and providing a speed signal of the first sensing device as an input to the safety function; and operating the wind turbine in the second operating mode and providing a speed signal of the second sensing device as an input to the safety function.

By obtaining the rotational speed of the wind turbine rotor by using at least a first sensing device and a second sensing device, the rotational speed of the wind turbine rotor of the wind turbine may be determined with a higher precision in the different operation modes. In particular, the noise level interfering with the desired rotational speed signal may be kept minimal in the corresponding operational mode by use of the respective sensing device. As a result, the safety function may be provided reliably with speed signals with a minimum noise level in the various operating modes.

Incorporating a safety function using the rotational speed of the wind turbine rotor obtained from sensing devices with low noise level in the corresponding operating mode may reliably indicate the reaching or exceeding of an overspeed threshold of the wind turbine rotor. This may allow a safer operation of the wind turbine due to a more exact determination if a overspeed condition is reached. Additionally, using signals from sensing devices with minimal noise level in the corresponding operating mode may avoid a false triggering of the safety function due a high noise level which may cause an exceeding of a triggering threshold. This may improve the time efficiency and reduce the cost of a wind turbine installation or maintenance procedure by reducing the need to disconnect the wind turbine's electric power generation system or completely stop work on the turbine due to a false alarm.

A lower noise level may for example mean that in the second speed range, a signal to noise ratio of the speed signal of the second sensing device may be lower than a signal to noise ratio of the speed signal of the first sensing device. A signal to noise ratio may be determined by determining a ratio of the signal power to the noise power of the respective speed signal. In a speed signal, the noise components may be distinguished from signal components (due to rotation) based on frequency (spectral components), by comparison to a reference (known rotation), or the like. A noise level may also be given by an error signal indicating a deviation of a measured rotational position of the wind turbine rotor from the actual rotational position of the wind turbine rotor, wherein the measured rotational position may form the basis for determining the respective speed signal. In another embodiment, a lower noise level may mean that the signal power attributable to noise in the speed signal of the second sensing device is lower than the signal power attributable to noise in the speed signal of the first sensing device. Any other known means of determining a respective noise level may be employed.

Accordingly, in the first operating mode, the safety function may employ the (first) speed signal of the first sensing device and in the second operating mode, the safety function may employ the (second) speed signal of the second sensing device, which has a lower noise level in the respective second speed range. For example, when switching wind turbine operation from the fist operating mode to the second operating mode, the input of the safety function may be switched from the first speed signal to the second speed signal.

In an embodiment, the first operating mode may be a power producing mode in which the wind turbine generates electrical power and/or the second operating mode may be a service mode or installation mode. It may thus become possible to provide effective safety measures that depend on rotor speed also during service or installation while avoiding unnecessary triggering of safety measures due to noise in the speed signal. Operation in an installation mode encompasses the removal of wind turbine components, e.g. removal of a rotor blade.

The second speed range may include lower rotational speeds than the first speed range. In an example, the first rotational speed range may have an upper limit between 5 rpm and 30 rpm and the second rotational speed range may have an upper limit between 0.2 rpm and 1 rpm. The lower limit of the first and second rotational speed ranges may for example be at 0 rpm. For example, in a power producing mode, the rotational speed of the rotor may be ramped up from 0 rpm to a nominal rotational speed; the rotor may then generally rotate at a speed between a cut in rotor speed (cut in wind conditions) and a nominal rotor speed (up to cut out wind conditions). In a service mode or installation mode, the wind turbine rotor may be rotated at low speed (e.g., < 1 rpm) to a desired position and may then be stopped for performing respective service or installation work.

In another example, the maximum value of the second speed range of the wind turbine rotor is lower than the minimum value of the first speed range of the wind turbine rotor.

By having two different speed ranges of the wind turbine rotor, it may be possible to use the sensing device having the lower noise level and/or higher accuracy in the current operating mode of the wind turbine. This may further improve the accuracy of the monitored signals.

The second operating mode may correspond to low rotational speeds of the wind turbine rotor and thus to significantly different conditions compared to the power producing (normal) operation of the wind turbine. By adding a sensing device that is able to specifically monitor with low noise a very low speed of the wind turbine rotor, which is usually the case during installation or service/maintenance of the wind turbine, an abnormal speed can be detected with greater accuracy, allowing countermeasures to be taken immediately. This may increase the safety of maintenance and installation.

According to an embodiment, the second operating mode comprises operating a generator of the wind turbine as a motor to rotate the wind turbine rotor.

Usually, the generator is only used as a motor of the rotor when the wind turbine is being maintained or installed, to turn the hub or blade(s) of the wind turbine rotor to the desired position. For such delicate operations, the wind turbine sensing devices should measure with as little noise as possible to avoid false alarms. This may be achieved by making use of the second sensing device with a (significantly) lower noise level than the first sensing device at these low rotor speed values, which may correspond to the second operating mode of the wind turbine.

In an embodiment, the method further comprises determining an absolute value of the speed signal and providing the determined absolute value of the speed signal as an input to the safety function.

By including an absolute value determination of the measured speed signal, it may be possible to use the speed signal for the safety function independently of the rotation direction of the rotor. This can be particularly useful during installation or maintenance of the wind turbine, as an overspeed of the wind turbine rotor can be observed more reliably and countermeasures can be taken more efficiently or quickly. It may also lead to a more robust post-analysis of the received signals.

In an embodiment, the safety function comprises an overspeed monitor that compares the received speed signal to a speed threshold to trigger a safety measure if the speed signal reaches or exceeds the speed threshold.

This may allow automatically checking if the rotational speed exceeds the overspeed threshold. Comparing the received signal to a threshold by the safety function can avoid the risk of the wind turbine components being subjected to loads exceeding their structural limits during installation and normal operation.

It may be possible to set a threshold value of the rotational speed depending on the operating mode. It may alternatively be possible to dynamically determine a threshold value of the rotational speed depending on the operating mode.

In an embodiment, the overspeed monitor compares the speed signal to a first speed threshold in the first operating mode and compares the speed signal to a second speed threshold in the second operating mode, wherein the second speed threshold is different, in particular lower, than the first speed threshold.

Changing the speed thresholds for the different operating modes may allow the use of the same safety function for the different operating modes. System configuration may thereby be facilitated and be made more efficient. Setting a speed threshold of the different operating modes may further allow the optimization of the threshold value of the rotational speed of the wind turbine rotor. Furthermore, the noise level of the associated speed sensing devices for the different operating modes may be taken into account for determining the respective threshold to ensure a more accurate assessment of when an overspeed condition is reached.

The second speed threshold may correspond to a rotational speed of the wind turbine rotor below 1 rpm, preferably below 0.5 rpm. More preferably, the second threshold of the rotational speed of the wind turbine rotor is between 0.2 and 0.4 rpm, e.g. 0.3 rpm.

The overspeed monitor may be operated continuously or in predetermined time intervals. The overspeed monitor may be operated continuously in the first operating mode and in predetermined time intervals in the second operating mode.

In another implementation, the overspeed monitor may be operated in predetermined time intervals in the first operating mode (e.g. normal operation) and continuously in potentially dangerous situations in the second operating mode.

In an embodiment, when the overspeed monitor detects a rotational speed of the wind turbine rotor above or equal to the respective speed threshold, a control is initiated to perform at least one of adjusting an operation of the wind turbine in a manner that reduces the rotational speed of the wind turbine rotor below the speed threshold, stopping rotation of the wind turbine rotor, and stopping operation of the wind turbine.

This may allow an immediate control action to be taken to counteract the overspeed of the wind turbine and to avoid dangerous loads on the wind turbine rotor components. A signal or notification may optionally be sent to an operator when the overspeed monitor detects an overspeed condition or initiates a control action. It may then be possible to initiate further control actions by the operator such that a reduction in speed can be implemented immediately.

In an example, in the second operating mode, the generator is operated to apply a torque to the wind turbine rotor to rotate the wind turbine rotor. If the wind turbine operates in the second operating mode and the safety function detects that the respective speed signal reaches or exceeds a speed threshold, a safety measure may be triggered that comprises stopping the applying of the torque by the generator to the wind turbine rotor. In particular, a power converter may be controlled to stop supplying power to the generator and/or may be disconnected from the generator. The wind turbine rotor may thus no longer be driven or held by the generator. If the wind turbine rotor is unbalanced (e.g. only one or two blades mounted for three blade rotor) and the torque applied by the generator is removed, the wind turbine rotor may swing out until it reaches an equilibrium position. Rotation of the wind turbine rotor is thus stopped.

This safety feature may especially protect the wind turbine component during an installation or maintenance process. By immediately stopping the generator and thus the application of torque, loads acting on the wind turbine components exceeding the rated limits may be avoided. This may enhance the safety of the installation and maintenance process of the wind turbine and in the further course the safe operation of the wind turbine.

In an example, the first sensing device comprises one or more sensors installed on the wind turbine rotor, in particular in a hub of the wind turbine rotor, wherein the first sensing device is preferably configured to measure a rotational motion of the wind turbine rotor.

The first sensing device may for example form part of a conventional safety system of the wind turbine installed in the hub, such as an overspeed protection system employed during power producing operation. This allows for a cost-effective implementation.

As an example, the first sensing device may comprise an indirect measurement technique for measuring rotor rotation, e.g., an accelerometer and/or gyroscope for measuring motion of the wind turbine rotor, e.g. of the hub. Specifically, it may comprise a capacitive accelerometer, such as a triaxial MEMS accelerometer.

In an embodiment, the second sensing device is an optical sensor, an inductive sensor, or a mechanical sensor that measures rotation of the wind turbine rotor relative to a nacelle of the wind turbine rotor. A part of the second sensing device, in particular an active part, may be installed in the nacelle.

Preferably, the second sensing device may comprise an incremental encoder, in particular an optical rotary encoder. This may ensure a high precision measurement with a low associated noise level at a low rotational speed of the wind turbine rotor. A mechanical sensor may for example comprise a wheel supported on one component (e.g. nacelle) and rolling on the other component (e.g. hub) to measure relative rotation, the rotation of the wheel being detected electrically or optically.

In an embodiment, operating the wind turbine in the second operating mode comprises controlling the rotational speed of the wind turbine rotor based on a speed signal received from a third sensing device that is configured to obtain a rotational speed of the wind turbine rotor, wherein the third sensing device is separate and distinct from the second sensing device.

The third sensing device may comprise an optical sensor, an inductive sensor, or a mechanical sensor that measures rotation of the wind turbine rotor.

Preferably, the third sensing device may comprise a mechanical encoder monitoring the rotational speed of the wind turbine rotor, such as the above-mentioned wheel.

The incorporation of a third separate and distinct sensing device for controlling the speed of the wind turbine in the second operating mode may provide another means for rotational speed monitoring during installation or maintenance of the wind turbine. Thereby, the control may be decoupled from the safety function. This may further enhance the safety of the process. In particular, in the event of malfunction of one sensing device, it may be ensured that either the reaching of an overspeed condition is still detected, or the control still operates safely. This may allow for safer installation or maintenance of the wind turbine components.

Alternatively, it may also be possible to use the second sensing device to also control the rotational speed of the wind turbine rotor instead of implementing a third sensing device. This may result in a more compact and cost-efficient configuration.

In other embodiments, the first operating mode may be a power producing mode for the first speed range and the second operating mode may be a power producing modes for the second speed range, wherein the first speed range may comprise rotational speeds higher than rotational speed comprised in the second speed range. Accordingly, for different operational speed ranges of the wind turbine rotor, different speed signals may be employed.

Preferably, the first sensing device has in the first speed range a noise level that is lower than a noise level of the second sensing device. Thus, in each speed range, the sensing device providing the lower noise level may be employed.

The wind turbine may be an offshore or onshore wind turbine and/or may be included in a wind power plant comprising a plurality of wind turbines. Furthermore, the wind turbine may comprise any power conversion system arrangement, such as a direct drive or a gearbox configuration.

According to a further aspect of the invention, a system for controlling the operation of a wind turbine is provided. The wind turbine comprises a wind turbine rotor and at least a first sensing device configured to obtain a rotational speed of the wind turbine rotor and a second sensing device configured to obtain a rotational speed of the wind turbine rotor. The wind turbine is operable in a first operating mode in which a rotational speed of the wind turbine rotor is within a first speed range and is operable in a second operating mode in which the rotational speed of the wind turbine rotor is within a second speed range. The second sensing device has a noise level in the second speed range that is lower than a noise level of the first sensing device in the second speed range. The system is configured to operate a safety function that uses the rotational speed of the wind turbine rotor as an input. The system comprises a processing unit and a memory, wherein the memory comprises control instructions which when executed by the processing unit cause the processing unit to perform any of the methods disclosed herein. The system may comprise the first sensing device, the second sensing device, and/or the optional third sensing device, if provided.

According to a further aspect of the invention, a respective wind turbine comprising such control system is provided.

According to another aspect of the invention, a computer program for controlling the operation of a wind turbine is provided. The wind turbine comprises a wind turbine rotor and at least a first sensing device configured to obtain a rotational speed of the wind turbine rotor and a second sensing device configured to obtain a rotational speed of the wind turbine rotor. The computer program comprises control instructions which, when executed by a processing unit of a system that controls the operation of the wind turbine, cause the processing unit to perform any of the methods disclosed herein. The computer program may be provided on a volatile or non-volatile data carrier or storage medium and/or may be provided via a communication connection, such as a wired or wireless network connection. The computer program may be provided for installation on a wind turbine controller, e.g. in form of an update.

By such control system, wind turbine or computer program, advantages may be achieved that correspond to the advantages outlined further above with respect to the method.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing the installation of a wind turbine rotor blade according to an embodiment.
Fig. 2 is a schematic drawing showing a wind turbine comprising a system according to an embodiment.
Fig. 3 is a schematic drawing illustrating components of the control system of Fig. 2.
Fig. 4 is a graph illustrating signals that may be received from sensing devices according to an embodiment.
Fig. 5 is a flow diagram illustrating a method that includes monitoring the rotational speed of a wind turbine rotor according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

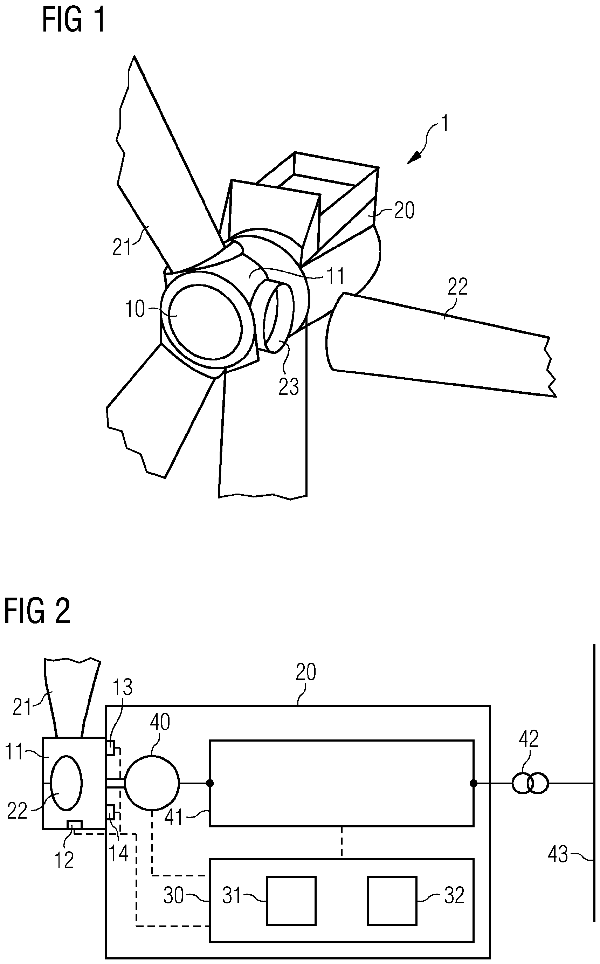

Fig. 1 schematically illustrates a wind turbine 1 having a wind turbine rotor 10 and a nacelle 20. The wind turbine 1 may be an offshore or onshore wind turbine and/or may be included in a wind power plant comprising a plurality of wind turbines 1. Furthermore, the wind turbine 1 may comprise any power conversion system arrangement, such as a direct drive or a generator coupled via a gearbox to the rotor 10.

The wind turbine rotor 10 of wind turbine 1 has two rotor blades 21 mounted to its hub 11. In Fig. 1, wind turbine 1 is shown during installation or removal of a third rotor blade 22. Hub 11 has been rotated to a position in which the blade mount 23 is oriented horizontally so that the rotor blade 22, which is suspended horizontally by a crane and yoke assembly (not shown) can be mounted to the blade mount 23 (or it may correspondingly be removed). If the angular position of wind turbine rotor 10 is considered to be 0° if the blade mount 23 points vertically upwardly, then the position shown in Fig. 1 corresponds to a 90° angular position.

It will be readily apparent that wind turbine rotor 10 is unbalanced, since the weight of the two rotor blades 21 acts on one side of the rotational axis of the rotor 10, thus causing a torque due to gravitation to be applied to rotor 10. This means that the wind turbine rotor 10 is unable to withstand the same loads and rotational speeds as in normal operation and is a vulnerable component in this arrangement.

The wind turbine 1 may be operable in a first operating mode in which a rotational speed of the wind turbine rotor 10 is within a first speed range and is operable in a second operating mode in which the rotational speed of the wind turbine rotor 10 is within a second speed range. The first operating mode may correspond to a power producing mode of the fully installed wind turbine 1 in which the wind turbine generates electrical power. The first speed range may thus comprise rotational speeds encountered during typical power generation operation. The second operating mode may correspond to an installation or service mode of the wind turbine 1, such as shown in Fig. 1.

Fig. 2 schematically shows an exemplary implementation of the wind turbine and further illustrates a safety function in accordance with an embodiment. The wind turbine rotor 10 comprises a first sensing device 12 installed thereon, in particular in the hub 11. Under normal operation, corresponding to the first operating mode of the wind turbine 1, the first sensing device 12 may be able to measure the rotational speed of the wind turbine rotor 10 with relatively low noise.

The first sensing device 12 may employ an indirect method of measuring the rotational speed of the wind turbine rotor 10. In particular, it may comprise an accelerometer or an inertial sensor and optionally a gyroscope. Furthermore, the first sensing device 12 may already be installed as a part of a safety system provided in the wind turbine rotor 10. The sensing device 12 may determine rotor movement using its sensor(s) and may determine therefrom rotational speed. The sensing device 12 may give out a respective (first) speed signal. It is noted that part of the first sensing device may be comprised in nacelle 20, e.g. a function that determines rotational speed from the sensor measurements.

The wind turbine 1 further comprises a second sensing device 13, which is configured to measure a relative rotation of the wind turbine rotor 10 with respect to a nacelle 20 of the wind turbine 1. During installation or maintenance of the wind turbine 1, which corresponds to the second operating mode of the wind turbine 1, the second sensing device 13 may be configured to monitor the rotational speed of the wind turbine rotor 10 with relatively low noise (compared to the first sensing device in this speed range). The second sensing device 13 may comprise an optical sensor, an inductive sensor, and/or a mechanical sensor that monitors rotation of the wind turbine rotor 10. Preferably, the second sensing device 13 may comprise an incremental encoder, in particular an optical rotary encoder. This may ensure a measurement with a low noise level at a low rotational speed of the wind turbine rotor 10.

The second sensing device 13 may comprise a detecting part installed fixedly either on the wind turbine rotor 10 (e.g. in the hub) or on the nacelle and may detect the relative motion of the other of the nacelle or hub, e.g. by a passing of optical features, a mechanical rolling on a part (e.g. on a flange) or the like. For example, a first part of the second sensing device 13, such as the detecting part, may be stationary and a second part (e.g. an optical pattern) may move with the same rotational speed as the wind turbine rotor 10. The detecting part of the second sensing device 13 may comprise a wheel supported on the hub or nacelle and rolling on a part of the respective other component. Alternatively, the detecting part of the second sensing device 13 may comprise an optical detector and an illumination means (e.g. a laser diode) and the second part of the second sensing device 13 may comprise an optical markings.

Additionally, a third sensing device 14 may be installed in the nacelle 20 to measure rotation of the wind turbine rotor 10 relative to the nacelle 20. The third sensing device 14 may provide a speed signal to a controller of the wind turbine that controls the speed of the wind turbine rotor during installation or maintenance. The third sensing device 14 may comprise an optical sensor, an inductive sensor, and/or a mechanical sensor that monitors the rotational speed of the wind turbine rotor 10. Preferably, the third sensing device 14 may comprise a mechanical encoder.

The wind turbine 1 comprises an electrical generator 40 mechanically coupled to the wind turbine rotor 10 and a power converter system 41. It further comprises a control system 30 that implements an overspeed safety function. All sensing devices 12, 13, 14 as well as the converter 41 may be coupled to the control system 30 and it may receive their respective monitoring signals, e.g. the first and second speed signals. The control system 30 may comprise a processing unit 31 and a memory 32.

Processing unit 31 may comprise any kind of processor, such as a microprocessor, an application-specific integrated circuit, a field-programmable gate array, a digital signal processor and the like. Memory 32 may comprise any kind of memory, such as RAM, ROM, EEPROM, Flash Memory, a hard-disk drive, and the like. Control system 30 may comprise further components common to a computer system, such as respective input/output interfaces, a data communication bus for interconnecting the different components, and a user interface. Memory 32 may store control instructions to be executed by processing unit 31. Such control instructions may be configured to cause the control system 30 to perform any of the methods described herein. Control system 30 may for example comprise a wind turbine controller and a converter controller. It may be configured to operate the wind turbine in the first operational mode and in the second operational mode. Processing unit 31 and memory 32 may be distributed across multiple controllers, i.e. may include multiple processing units and memories.

The converter system 41 is coupled to a transformer 42. Transformer 42 is coupled to power grid 43 to exchange electrical power with the power grid and in particular to feed power to the power grid in the first operating mode and to draw power from power grid 43 during operation of generator 40 as a motor in the second operating mode. The power grid 43 may comprise the public power grid. Other power sources may supply electrical power to generator 40 in the second operating mode, such as a battery or other power storage, a diesel generator or the like.

The control system 30 may be configured to control the rotational speed of the wind turbine rotor depending on the present selected operating mode of the wind turbine 1 and the speed signals measured by the sensing devices 12, 13, 14.

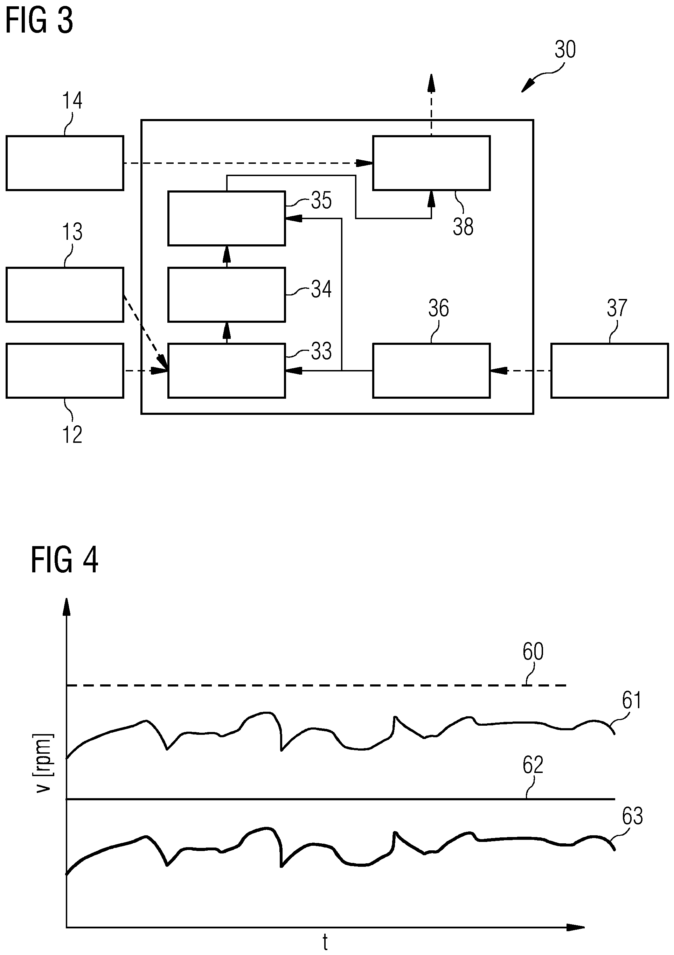

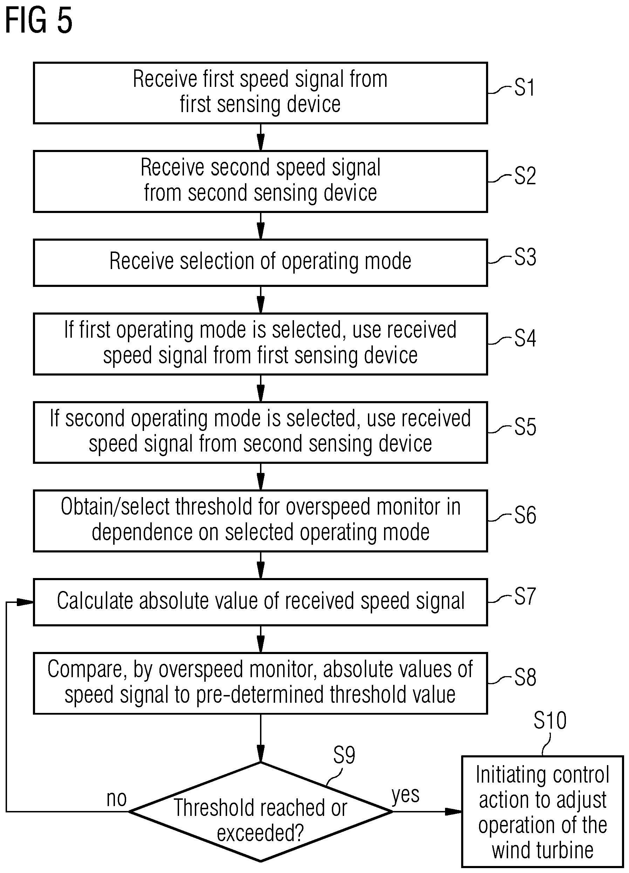

Fig. 3 illustrates the functional components that may be implemented by the control system 30. An embodiment of the method that may be carried out by the control system 30 is shown in Fig. 5. Both figures will be described in more detail in combination in the following.

The control system 30 may receive a first speed signal from the first sensing device 12 in step S1 and a second speed signal from the second sensing device 13 in step S2.

It may also receive a third signal from the third sensing device 14.

In a further step S3 the control system 30 may receive the selection of the operating mode of the wind turbine 1 by a user input 37, e.g. via a user interface or a communication connection. The received user input is processed by a mode selection unit 36, which delivers a mode selection signal to a signal selection block 33 and to a safety function implemented as an overspeed monitor 35. The mode selection signal indicates the operating mode that has been selected and in which the wind turbine 1 is to be operated.

If the first operating mode is selected, the mode selection block 33 passes the speed signal received from the first sensing device 12 to the absolute value determination unit 34 for further processing in step S4. If the second operating mode is selected, the mode selection block 33 passes the speed signal received from the second sensing device 13 to the absolute value determination unit 34 for further processing in step S5.

Furthermore, the overspeed monitor 35 may obtain or select an upper threshold for the rotational speed of the wind turbine rotor 10 depending on the received mode selection signal by the mode selection block 33 in step S6. The overspeed monitor 35 may be able to select threshold values from the memory 32. The selected threshold value may then correspond to a predetermined value that depends on the operation mode of the wind turbine 1. Alternatively, it may also be possible that the overspeed monitor 35 dynamically changes the threshold of the rotational speed of the wind turbine rotor 10. The control system 30 may further be able to store data values about the rotational speed in the memory 32 for further analysis.

The absolute value determination unit 34 receives the selected signal from the signal selection block 33 and determines the absolute value of the received speed signal in step S7. The determined absolute value of the received speed signal may then be transferred to the overspeed monitor 35, which compares the speed signal to the selected or obtained threshold value associated with the selected operating mode in step S8.

If in the decision step S9, the threshold is reached or exceeded, a safety measure is triggered. For example, a control is initiated in a next step S10 to perform at least one of adjusting an operation of the wind turbine 1 in a manner that reduces the rotational speed of the wind turbine rotor 10 below the speed threshold 60, stopping rotation of the wind turbine rotor, and stopping operation of the wind turbine. This may be performed by the overspeed control unit 38 that is able to control the converter 41 and the generator 40 such that the rotational speed of the wind turbine rotor 10 is lowered below the threshold. In the first operating mode (e.g. during power generation), the reduction of the rotational speed of the wind turbine may be performed by pitching out the rotor blades; control system 30 may be configured to provide a respective control signal to a pitch drive (not shown) of the rotor blades. In the second operating mode (e.g. service or installation) in case of a triggering of the safety measure, the power converter 41 may be controlled so that the generator 40 does no longer apply torque to the rotor 10, i.e. the operation of the generator 40 as motor is stopped, allowing the rotor 10 to swing out.

Overspeed control unit 38 may for example be partly implemented by a converter controller by means of which the rotational speed of rotor 10 is controlled based on the speed signal of the third sensing device 14. The effectiveness of the rotational speed reduction process may be controlled by the overspeed control unit by using the received signals from the third sensing device 14.

If the threshold is not reached or exceeded in step S9, the method continues by processing the selected and received speed signal in step S7 and checking if the speed signal exceeds the respective threshold in steps S8 and S9. The method may end if the selected operational mode is quit or if a new operational mode is selected.

It is to be understood that some of the above steps for monitoring the rotational speed of a rotor of a wind turbine by using dedicated sensors may be carried out simultaneously, continuously, or in a different order. For example, the receiving of speed signals in steps S1 and S2 may be performed continuously and simultaneously during the method, or only one of these two signals may be received in the respective operating mode.

The monitoring, in particular the safety function 35, may be operated continuously or in predetermined time intervals. It may further be possible to operate the monitoring continuously in the first operating mode and in predetermined time intervals in the second operating mode. It may also be possible to operate the monitoring in predetermined time intervals under normal operation and continuously in potentially dangerous situations in the second operating mode.

Fig. 4 is a graph illustrating speed signals, which may be received by the overspeed monitor 35. The vertical axis corresponds to the rotational speed v in revolutions per minute (rpm) of the wind turbine rotor 10 and the horizontal axis to time t. Dashed line 60 corresponds to the threshold value selected/obtained in dependence on the selected operating mode. For the second operating mode, it may for example lie at 0.4 rpm.

The threshold value 60 is compared, by the overspeed monitor 35, to the speed signal received from the signal selection block 33. The speed signal 61 illustrates a superposition of the actual speed signal 63 and the noise 62, as it may be obtained from the sensing device 12 in the second operating mode (i.e. during slow rotation speed). Having a very high noise level signal of the sensing device may cause a triggering of a control action initiated by the overspeed monitor 35 although the actual speed signal 63 and thus the rotational speed of the wind turbine rotor 10 may be far below the predetermined threshold 60.

Accordingly, in the second operating mode, the signal 61 from the first sensing device 12 is not provided to overspeed monitor 35, but the speed signal of the second sensing device 13 is selected by signal selection block 33. In the second operating mode, the noise level for this signal may be rather low, it may hardly be visible on the scale of Fig. 4. The speed signal provided by the second sensing device 13 in the second operation mode may thus correspond to the actual speed 63 illustrated in Fig. 4. For the first operating mode, the situation may be reversed, i.e. the first sensing device 12 may benefit from a lower noise level and the second sensing device 13 may suffer from higher noise. By using sensing devices that are optimally suited for different operating modes of the wind turbine 1, the noise level 62 may be kept as low as possible such that a false triggering of a countermeasure to bring the rotational speed of the wind turbine rotor 10 below the threshold may be avoided and a reliable monitoring of an overspeed condition for the operating modes of the wind turbine 1 may be ensured.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a wind turbine (1) that comprises a wind turbine rotor (10), wherein the wind turbine (1) comprises at least a first sensing device (12) configured to obtain a rotational speed of the wind turbine rotor (10) and a second sensing device (13) configured to obtain a rotational speed of the wind turbine rotor (10), wherein the wind turbine (1) is operable in a first operating mode in which a rotational speed of the wind turbine rotor (10) is within a first speed range and is operable in a second operating mode in which the rotational speed of the wind turbine rotor (10) is within a second speed range, wherein the second sensing device (13) has a noise level in the second speed range that is lower than a noise level of the first sensing device (12) in the second speed range, wherein the wind turbine (1) is configured to operate a safety function that uses the rotational speed of the wind turbine rotor (10) as an input, wherein the method comprises:
- operating the wind turbine (1) in the first operating mode and providing a speed signal of the first sensing device (12) as an input to the safety function; and
- operating the wind turbine (1) in the second operating mode and providing a speed signal of the second sensing device (13) as an input to the safety function.

2. The method according to claim 1, wherein the first operating mode is a power producing mode in which the wind turbine (1) generates electrical power and/or wherein the second operating mode is a service mode or installation mode.

3. The method according to claim 1 or 2, wherein the first speed range of the wind turbine rotor (10) has an upper limit between 5 rpm and 30 rpm and wherein the second speed range of the wind turbine rotor (10) has an upper limit between 0.2 rpm and 1 rpm.

4. The method according to any of the preceding claims, wherein operating the wind turbine (1) in the second operating mode comprises an operation of a generator (40) of the wind turbine (1) as a motor to rotate the wind turbine rotor (10).

5. The method according to any of the preceding claims, wherein the method further comprises determining an absolute value of the respective speed signal and providing the determined absolute value of the speed signal as an input to the safety function.

6. The method according to any of the preceding claims, wherein the safety function comprises an overspeed monitor (35) that compares the received speed signal to a speed threshold (60) to trigger a safety measure if the speed signal reaches or exceeds the speed threshold (60).

7. The method according to claim 6, wherein the overspeed monitor (35) compares the respective speed signal to a first speed threshold in the first operating mode and compares the respective speed signal to a second speed threshold in the second operating mode, wherein the second speed threshold is different from, in particular lower than, the first speed threshold.

8. The method according to claim 6 or 7, wherein when the overspeed monitor (35) detects a rotational speed of the wind turbine rotor (10) above or equal to the respective speed threshold (60), a control is initiated to perform at least one of
- adjusting an operation of the wind turbine (1) in a manner that reduces the rotational speed of the wind turbine rotor (10) below the speed threshold (60),
- stopping rotation of the wind turbine rotor, and
- stopping operation of the wind turbine.

9. The method according to any of the preceding claims, wherein in the second operating mode, the generator (40) is operated to apply a torque to the wind turbine rotor (10) to rotate the wind turbine rotor (10), and wherein, if the wind turbine (1) operates in the second operating mode and the safety function detects that the respective speed signal reaches or exceeds a speed threshold, a safety measure is triggered that comprises stopping the applying of the torque by the generator (40) to the wind turbine rotor (10).

10. The method according to any of the preceding claims, wherein the first sensing device (12) comprises one or more sensors installed on the wind turbine rotor (10), in particular in a hub (11) of the wind turbine rotor (10), wherein the first sensing device is preferably configured to measure a rotational motion of the wind turbine rotor.

11. The method according to any of the preceding claims, wherein the second sensing device (13) is configured to measure a relative rotation of the wind turbine rotor (10) with respect to a nacelle (20) of the wind turbine (1).

12. The method according to any of the preceding claims, wherein the second sensing device (13) comprises at least one of an optical sensor, an inductive sensor, or a mechanical sensor that measures the rotational speed of the wind turbine rotor (10).

13. The method according to any of the preceding claims, wherein operating the wind turbine (1) in the second operating mode comprises controlling the rotational speed of the wind turbine rotor (10) based on a speed signal received from a third sensing device (14) that is configured to obtain a rotational speed of the wind turbine rotor (10), wherein the third sensing device (14) is separate and distinct from the second sensing device (13).

14. A system (30) for controlling the operation of a wind turbine (1), wherein the wind turbine (1) comprises a wind turbine rotor (10) and at least a first sensing device (12) configured to obtain a rotational speed of the wind turbine rotor (10) and a second sensing device (13) configured to obtain a rotational speed of the wind turbine rotor (10), wherein the wind turbine is operable in a first operating mode in which a rotational speed of the wind turbine rotor (10) is within a first speed range and is operable in a second operating mode in which the rotational speed of the wind turbine rotor (10) is within a second speed range, wherein the second sensing device (13) has a noise level in the second speed range that is lower than a noise level of the first sensing device (12) in the second speed range, wherein the system (30) is configured to operate a safety function that uses the rotational speed of the wind turbine rotor (10) as an input, wherein the system (30) comprises a processing unit (31) and a memory (32), wherein the memory (32) comprises control instructions which when executed by the processing unit (31) cause the processing unit (31) to perform the method of any of the preceding claims.

15. A computer program for controlling the operation of a wind turbine (1), wherein the wind turbine (1) comprises a wind turbine rotor (10) and at least a first sensing device (12) configured to obtain a rotational speed of the wind turbine rotor (10) and a second sensing device (13) configured to obtain a rotational speed of the wind turbine rotor (10), wherein the computer program comprises control instructions which, when executed by a processing unit (31) of a system (30) that controls the operation of the wind turbine (1), cause the processing unit (31) to perform the method of any of claims 1-13.
